# EUROPÄISCHE PATENTSCHRIFT

(11) **EP 0 388 464 B1**
(45) Veröffentlichungstag und Bekanntmachung des Hinweises auf die Patenterteilung: **30.03.1994**
(21) Anmeldenummer: 89911048.0
(22) Anmeldetag: 27.09.1989
(51) Int. Cl.: H02P 7/00

(54) **STEUEREINRICHTUNG**
CONTROL DEVICE
DISPOSITIF DE COMMANDE

(30) Priorität: 29.09.1988 DE 3833016
(43) Veröffentlichungstag der Anmeldung: 26.09.1990
(73) Patentinhaber: TOROTRON ELEKTRONIK GMBH, D-73230 Kirchheim (DE)
(72) Erfinder: ANKELE, Thomas Michael, D-7440 Nürtingen (DE)
(74) Vertreter: Hoeger, Stellrecht & Partner
(86) Internationale Anmeldenummer: EP8901132
(87) Internationale Veröffentlichungsnummer: WO9003689

(56) Entgegenhaltungen:
- CH-A- 541 711
- US-A- 3 619 747
- US-A- 3 896 355
- US-A- 4 413 211

## Beschreibung

Die Erfindung betrifft eine Steuereinrichtung für einen einphasig betreibbaren Wechselstrommotor, welcher mindestens eine erste und eine zweite, mit der anderen jeweils phasenverschoben gekoppelte Wicklung aufweist, mit einem Leitungsanschluß, mit einem ersten und einem zweiten Wicklungsanschluß für die erste bzw. die zweite Wicklung des Wechselstrommotors, mit einem Steuerteil, umfassend ein erstes und ein zweites zwischen dem Leitungsanschluß und dem ersten bzw. zweiten Wicklungsanschluß liegendes Schaltelement von denen jeweils eines in einem Schaltzustand des Steuerteils je nach Laufrichtung des Wechselstrommotors offen und das andere geschlossen ist und von denen in einem Ruhezustand des Steuerteils mindestens eines offen ist, und mit einem Stromversorgungsteil zur Bereitstellung der elektrischen Energie für das Steuerteil, wobei das Stromversorgungsteil im Ruhezustand des Steuerteils unter Heranziehung einer ersten Potentialdifferenz zwischen dem Leitungsanschluß und einem dem im Ruhezustand offenen Schaltelement zugeordneten Wicklungsanschluß und im Schaltzustand des Steuerteils unter Heranziehung einer zweiten Potentialdifferenz zwischen dem Leitungsanschluß und dem im Schaltzustand offenen Schaltelement zugeordneten Wicklungsanschluß arbeitet.

Bei den bisher bekannten Steuereinrichtungen war es stets erforderlich, für das Stromversorgungsteil sowohl die Phase als auch den Nulleiter zu der Steuereinrichtung zu führen, damit dieses in der Lage ist, das Steuerteil ständig mit der erforderlichen elektrischen Energie zu versorgen. Soll nun ein bereits vorhandener elektromechanischer Schalter, welcher lediglich beispielsweise die Phase auf einen der Wicklungsanschlüsse des Elektromotors schaltet durch eine derartige Steuereinrichtung ersetzt werden, so besteht das Problem, daß zusätzlich zu der Leitung für die Phase und den Leitungen für die beiden Wicklungsanschlüsse der Nulleiter herangeführt werden muß, um eine ständige Stromversorgung dieser Steuereinrichtung unabhängig von dem Betrieb des Wechselstrommotors sicherzustellen. Dies schafft insbesondere dann Probleme, wenn dies im Rahmen einer Hausinstallation, insbesondere unter Verwendung einer bereits vorhandenen bauseitigen Installationsdose, erfolgen soll.

Die US-A-3,896,355 offenbart zwar im Prinzip eine sogenannte "Zweidrahtsteuerung" mit den eingangs genannten Merkmalen diese "Zweidrahtsteuerung" bietet jedoch keine ausreichende Schaltsicherheit für den Motor, da bei den Triacs aufgrund auftretender Spannungsspitzen Zündprobleme auftreten, insbesondere derart, daß beide Triacs gleichzeitig zünden, was dann zu einer Beschädigung der Triacs beim Einsatz eines Wechselstrommotors mit zwei jeweils phasenverschobenen Windungen führt.

Ferner ist das Stromversorgungsteil gemäß der US-A-3,896,355 zwar für Triacs ausreichend, es arbeitet jedoch lediglich bei positiven Halbwellen, was ebenfalls nicht zur Schaltsicherheit beiträgt.

Der Erfindung liegt daher die Aufgabe zugrunde, eine Steuereinrichtung der gattungsgemäßen Art derart zu verbessern, daß diese eine große Schaltsicherheit gewährleistet.

Diese erfindungsgemäßen Lösungen sehen vor, daß Relais eingesetzt werden und daß auch das Stromversorgungsteil entsprechend den nachfolgenden alternativen Varianten ausgebildet wird, woraus sich die für einen Einsatz insbesondere in der Haustechnik geforderte große Betriebssicherheit ergibt.

Die vorstehende Aufgabe wird bei einer Steuerung der eingangs beschriebenen Art gemäß einer ersten Variante der erfindungsgemäßen Lösung dadurch gelöst, daß die Schaltelemente als Relais ausgebildet sind, daß der zweite Stromversorgungsanschluß über jeweils einen Wechselstromwiderstand mit jedem Wicklungsanschluß verbunden ist, welche im Schaltzustand als Spannungsteiler wirken, an dessen Mittelabgriff der zweite Stromversorgungsanschluß liegt.

Bei dieser Variante ist unter einem Wechselstromwiderstand ganz allgemein jedes strombegrenzende Bauteil oder jede strombegrenzende Baugruppe zu verstehen. Bei diesem Ausführungsbeispiel ist somit ein Umschalten des zweiten Stromversorgungsanschlusses auf die verschiedenen Wicklungsanschlüsse überhaupt nicht nötig, sondern es wird je nachdem, ob die Schaltelemente in ihrem Ruhezustand oder im Schaltzustand sind, an dem Stromversorgungsteil jeweils die erste oder zweite Potentialdifferenz angelegt. Wenn nämlich beide Schaltelemente offen sind, besteht über beide Wechselstromwiderstände eine Verbindung mit beiden Wicklungsanschlüssen, so daß jeweils über mindestens einen Wicklungsanschluß der erforderliche Strom von dem zweiten Stromversorgungsanschluß zum Nulleiter fließen kann. Wenn dagegen im Schaltzustand ein Schaltelement geschlossen ist, so wirken die beiden Wechselstromwiderstände als Spannungsteiler, an deren Mittelabgriff der Stromversorgungsanschluß liegt. Der Spannungsteiler liegt nunmehr zwischen den beiden Wicklungsanschlüssen, wobei, wie bereits eingangs beschrieben, zwischen beiden Wicklungsanschlüssen die aufgrund der Phasenverschiebung zwischen den Wicklungen des Wechselstrommotors bestehende Spannungsdifferenz anliegt und somit je nach Ausbildung der Wechselstromwiderstände, zwischen dem ersten und dem zweiten Stromversorgungsanschluß einen Bruchteil dieser Spannungsdifferenz, bei identischen Wechselstromwiderständen die Hälfte dieser Spannungsdifferenz, anliegt.

Im Rahmen der vorliegenden Erfindung können die Wechselstromwiderstände ohm'sche Widerstände umfassen. Um jedoch die entstehende Wärme möglichst gering zu halten, ist es von Vorteil, wenn die Wechselstromwiderstände Kapazitäten umfassen.

Besonders zweckmäßig ist es dabei, wenn das Stromversorgungsteil einen von den beiden Stromversorgungsanschlüssen gespeisten Brückengleichrichter umfaßt.

Die vorstehend genannte Aufgabe wird bei einer Steuerung der eingangs beschriebenen Art gemäß einer zweiten Variante der erfindungsgemäßen Lösung dadurch gelöst, daß die Schaltelemente als Relais ausgebildet sind und daß das Stromversorgungsteil durch einen ersten Stromversorgungsanschluß mit dem Leitungsanschluß und durch mindestens einen zweiten Stromversorgungsanschluß im Ruhezustand und im Schaltzustand durch mindestens ein je nach Laufrichtung des Wechselstrommotors angesteuertes Umschaltglied mit dem ausgewählten Wicklungsanschluß verbunden ist.

Die Lösung gemäß dieser Variante besteht somit darin, die notwendige Verbindung zwischen dem Stromversorgungsanschluß und dem jeweiligen Wicklungsanschluß dadurch herzustellen, daß der zweite Stromversorgungsanschluß im Ruhezustand und im Schaltzustand durch mindestens ein je nach Laufrichtung des Wechselstrommotors angesteuertes Umschaltglied mit dem ausgewählten Wicklungsanschluß verbunden ist.

Ein derartiges Umschaltglied kann grundsätzlich zusätzlich zu den beiden Schaltelementen vorgesehen sein. Um die erfindungsgemäße Steuereinheit jedoch möglichst einfach auszubilden, ist vorgesehen, daß mindestens eines der Schaltelemente als Umschaltglied ausgebildet ist und den diesem zugeordneten Wicklungsanschluß entweder mit dem Leitungsanschluß oder mit dem zweiten Stromversorgungsanschluß verbindet. Besonders vorteilhaft ist es dabei, wenn beide Schaltelemente als derartige Umschaltglieder ausgebildet sind.

Ferner ist es auch bei der zweiten Variante zweckmäßig, wenn der zweite Stromversorgungsanschluß über jeweils einen Wechselstromwiderstand mit jedem Wicklungsanschluß verbunden ist. Dabei können die Wechselstromwiderstände Induktivitäten, Kapazitäten oder ohm'sche Widerstände sein. Besonders vorteilhaft ist es, wenn diese Wechselstromwiderstände Kapazitäten umfassen.

Da die erfindungsgemäßen Steuereinrichtungen beispielsweise zur Steuerung von Wechselstrommotoren dienen, welche zum Betrieb von Rolläden, Markisen oder ähnlichem eingesetzt sind, und daher in jeder Laufrichtung durch Endschalter abgeschaltet werden, ist es im Rahmen der vorliegenden Erfindung gemäß den genannten Varianten zweckmäßig, wenn im Ruhezustand des Steuerteils die erste Potentialdifferenz zwischen dem Leitungsanschluß und dem beim vorigen Schaltzustand dem offenen Schaltelement zugeordneten Wicklungsanschluß herangezogen wird.

Damit ist auch bei einem Wechselstrommotor mit Endschaltern stets sichergestellt, daß im Ruhezustand ein Strom von dem Stromversorgungsteil über den Wechselstrommotor zum jeweils anderen Leiter fließen kann und dieser nicht durch einen möglichen Abschalter unterbrochen ist.

Besonders vorteilhaft läßt sich jedoch ein Stromfluß im Ruhezustand dadurch sicherstellen, daß die erste Potentialdifferenz zwischen dem Leitungsanschluß und sowohl dem ersten als auch dem zweiten Wicklungsanschluß herangezogen wird, so daß dann, wenn ein Endschalter betätigt ist, stets über den anderen noch geschlossenen Endschalter der erforderliche Strom fließen kann und nicht die Notwendigkeit besteht, die erste Potentialdifferenz im Ruhezustand entsprechend dem vorhergehenden Schaltzustand abzugreifen.

Eine besonders einfache Lösung sieht vor, daß das Stromversorgungsteil durch einen ersten Stromversorgungsanschluß mit dem Leitungsanschluß und durch mindestens einen zweiten Stromversorgungsanschluß mit dem entsprechend dem Schalt- oder Ruhezustand ausgewählten Wicklungsanschluß verbunden ist. Unter dem Begriff "verbunden" ist auch gegebenenfalls die Zwischenschaltung strombegrenzender Bauteile zu verstehen.

Um jedoch eine potentialfreie Stromversorgung des Steuerteils zu erhalten, ist es von Vorteil, wenn zwischen dem ersten und zweiten Stromversorgungsanschluß eine Primärwicklung eines Transformators liegt und wenn eine Sekundärwicklung derselben zur Bereitstellung der elektrischen Energie für das Steuerteil herangezogen wird.

In diesem Fall ist das Steuerteil als Ganzes potentialfrei, so daß es insbesondere den Sicherheitsvorschriften für eine externe Bedienung entspricht.

Bei allen bekannten Ausführungsbeispielen ist es erforderlich, daß die Stromversorgung einen Gleichrichter aufweist. Dieser Gleichrichter kann dabei direkt zwischen dem ersten und zweiten Stromversorgungsanschluß des Stromversorgungsteils geschaltet sein.

Da alle bisher beschriebenen Varianten die Verwendung eines Gleichrichters erforderlich machen, welcher vorzugsweise ein Brückengleichrichter aus Dioden ist, ist bei einem weiteren Ausführungsbeispiel, bei welchem insbesondere eine Minimalzahl von verwendeten Bauteilen erwünscht ist, um dieses möglichst kompakt zu bauen, vorgesehen, daß der zweite Stromversorgungsanschluß mindestens über jeweils eine Diode mit jedem Wicklungsanschluß verbunden ist und daß die Dioden gleichsinnig gepolt sind. Dieses Ausführungsbeispiel ist vom grundsätzlichen Prinzip her dem Ausführungsbeispiel ähnlich, bei welchem die beiden Wechselstromwiderstände einen Spannungsteiler bilden, allerdings mit dem Unterschied, daß anstelle der Wechselstromwiderstände nun die beiden in Durchlaßrichtung angeordneten Dioden verwendet werden.

Die vorstehend genannte Aufgabe wird ferner bei einer Steuerung der eingangs beschriebenen Art gemäß einer dritten Variante der erfindungsgemäßen Lösung dadurch gelöst, daß die Schaltelemente als Relais ausgebildet sind, daß das Stromversorgungsteil zwei zweite Stromversorgungsanschlüsse umfaßt, die jeweils mit einem Wicklungsanschluß verbunden sind, daß zwischen jedem Leitungsanschluß und jedem zweiten Stromversorgungsanschluß eine Primärwicklung eines Transformators liegt und daß eine Sekundärwicklung jedes Transformators mit der jeweils anderen gekoppelt ist.

Bei dieser dritten Variante der erfindungsgemäßen Idee liegt also ständig zwischen dem Wicklungsanschluß und dem Leitungsanschluß eine Primärwicklung, so daß im Ruhezustand des Steuerteils zumindest über eine von diesen ein Strom von dem Leitungsanschluß über den Wechselstrommotor zum Nulleiter fließen kann. Im Schaltzustand des Steuerteils fließt über die Primärwicklung, welche mit dem dem geschlossenen Schaltelement zugeordneten Wicklungsanschluß verbunden ist, kein Strom, da an dieser keine Spannungsdifferenz anliegt, während durch die andere Primärwicklung, an der die aufgrund der Phasenverschiebung zwischen den Wicklungen bestehende Spannungsdifferenz anliegt, ein Strom fließt, so daß diese zur Auskopplung der erforderlichen elektrischen Energie herangezogen werden kann.

Mit dieser Lösung läßt sich insbesondere in einfacher Weise eine potentialfreie Stromversorgung des Steuerteils realisieren.

Da außerdem auch noch eine Gleichrichtung erfolgen muß, ist vorzugsweise vorgesehen, daß jede Sekundärwicklung mit einem Eingang jeweils eines Gleichrichters verbunden ist und die Ausgänge der Gleichrichter parallelgeschaltet sind.

Bei allen bisher beschriebenen Ausführungsbeispielen der erfindungsgemäßen Lösung besteht das Problem, daß bei Wechselstrommotoren mit einem Abschalter für Endlagenpositionen dann, wenn dieser Wechselstrommotor aus dieser Endposition herauslaufen soll, zunächst dieser Abschalter für eine kurze Zeitspanne die Verbindung zu dem Wicklungsanschluß noch unterbrochen hält, so daß im Schaltzustand für eine kurze Zeit die zweite Potentialdifferenz nicht zur Verfügung steht, da diese erst dann an den Wicklungsanschlüssen anliegt, wenn der entsprechende Abschalter nicht mehr betätigt und somit geschlossen ist. Bei Betätigen der Steuereinrichtung würde der Wechselstrommotor nur für eine kurze Zeit anlaufen, da dann die Stromversorgung für die Steuereinheit zusammenbrechen würde und diese somit nicht mehr in der Lage wäre, die Schaltelemente anzusteuern. Aus diesem Grund ist es zweckmäßig, wenn das Stromversorgungsteil einen elektrischen Energiespeicher, beispielsweise einen Akkumulator, umfaßt. Im einfachsten Fall kann dies ein Kondensator sein, da dieser so dimensioniert werden kann, daß er für die kurze erforderliche Zeit die notwendige Energie bereithält, um das Steuerteil zu versorgen.

Die Erfindung ist somit bei allen drei Varianten und deren vorteilhaften Weiterbildungen insbesondere darin zu sehen, im Ruhezustand die volle an einem der Schaltelemente anliegende Spannung zum Betrieb des Stromversorgungsteils heranzuziehen, wobei die Steuereinrichtung einerseits über den Leitungsanschluß und andererseits über den Wechselstrommotor vom Nulleiter die für ihren Betrieb erforderliche geringe elektrische Energie bezieht. Im Schaltzustand des Steuerteils wird dagegen der Spannungsabfall zwischen dem ersten und dem zweiten Wicklungsanschluß herangezogen, welcher der für die

Erzeugung eines zum Laufen des Motors notwendigen Drehfeldes entsprechenden Phasenverschiebung zwischen den beiden Wicklungen entspricht. Da das Steuerteil im Schaltzustand einen Wicklungsanschluß mit dem Leitungsanschluß verbindet, wird folglich die Spannung zwischen dem Leitungsanschluß und dem dem offenen Schaltelement zugeordneten Wicklungsanschluß herangezogen. Da die Phasenverschiebung zwischen den beiden Wicklungen beispielsweise durch einen Motorkondensator herbeigeführt wird, entspricht die in diesem Fall am Stromversorgungsteil angelegte Spannung dem Spannungsabfall an diesem Motorkondensator beim Betrieb des Wechselstrommotors.

Sämtliche vorstehend genannten erfindungsgemäßen Lösungen lassen sich aufgrund ihrer Vorteile in übliche bauseitig vorhandene Installationsdosen einbauen.

Weitere Merkmale und Vorteile der erfindungsgemäßen Lösung sind Gegenstand der nachfolgenden Beschreibung sowie der zeichnerischen Darstellung einiger Ausführungsbeispiele.

In der Zeichnung zeigen:
- Fig. 1: ein erstes Ausführungsbeispiel;
- Fig. 2: ein zweites Ausführungsbeispiel;
- Fig. 3: ein drittes Ausführungsbeispiel;
- Fig. 4: ein viertes Ausführungsbeispiel und
- Fig. 5: ein fünftes Ausführungsbeispiel.

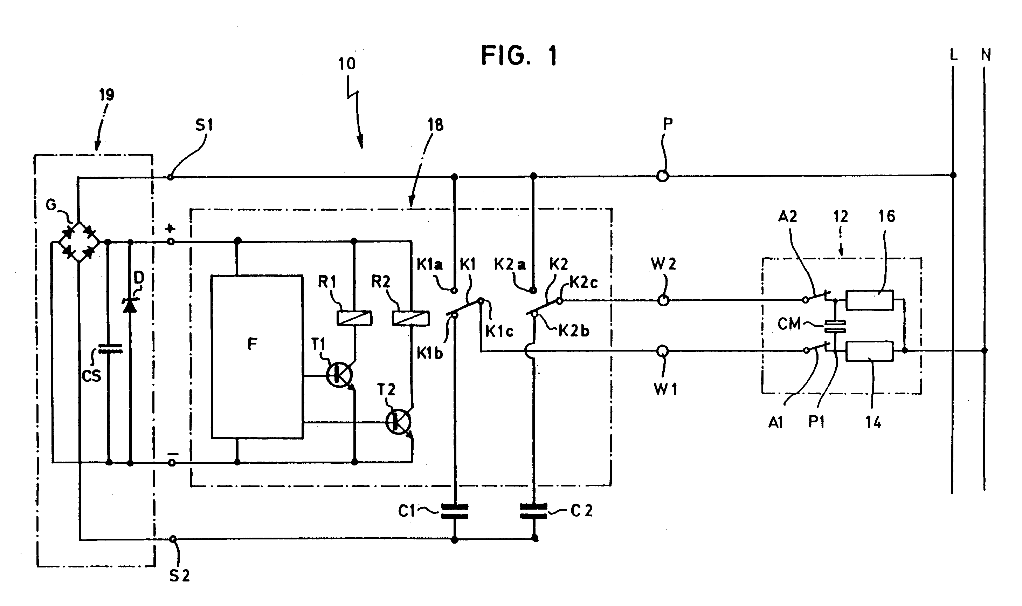

Ein als Ganzes mit 10 bezeichnetes erstes Ausführungsbeispiel einer erfindungsgemäßen Steuereinrichtung, dargestellt in Fig. 1, weist einen Phasenanschluß P auf, welcher an eine Phase L einer üblichen Wechselstromleitung anschließbar ist. Ferner weist die Steuereinrichtung 10 noch einen ersten Wicklungsanschluß W1 sowie einen zweiten Wicklungsanschluß W2 auf. Sowohl mit dem ersten Wicklungsanschluß W1 als auch mit dem zweiten Wicklungsanschluß W2 ist ein als Ganzes mit 12 bezeichneter Wechselstrommotor verbunden, welcher seinerseits noch an einen Nulleiter N der bereits erwähnten üblichen Wechselstromleitung angeschlossen ist. Dieser Wechselstrommotor 12 umfaßt eine erste Wicklung 14 als auch eine zweite Wicklung 16, welche nulleiterseitig gemeinsam mit dem Nulleiter N der bereits erwähnten Wechselstromleitung und phasenseitig jeweils mit dem ersten Wicklungsanschluß W1 bzw. dem zweiten Wicklungsanschluß W2 verbunden sind. Ferner ist phasenseitig noch eine Kopplung zwischen den beiden Wicklungen 14, 16 vorgesehen, welche über einen Motorkondensator CM erfolgt. Der Wechselstrommotor 12 wird so betrieben, daß entweder der erste Wicklungsanschluß W1 oder der zweite Wicklungsanschluß W2 von der Steuereinrichtung 10 mit dem Phasenanschluß P verbunden werden, so daß die jeweilige erste Wicklung 14 bzw. zweite Wicklung 16 direkt mit dem Phasenanschluß P verbunden sind, während die jeweils andere Wicklung, d.h. die zweite Wicklung 16 bzw. erste Wicklung 14,über den Motorkondensator CM mit dem Phasenanschluß P verbunden ist, welcher eine Phasenverschiebung in Bezug auf die direkt mit dem Phasenanschluß verbundene erste bzw. zweite Wicklung 14 bzw. 16 und damit das zumindest für ein Anlaufen des Wechselstrommotors 12 erforderliche phasenverschobene Drehfeld der ersten Wicklung 14 in bezug auf die zweite Wicklung 16 erzeugt.

Somit kann der Wechselstrommotor 12 durch Verbindung des ersten Wicklungsanschlusses W1 mit dem Phasenanschluß P in einer Laufrichtung betrieben werden und eine Umkehr der Laufrichtung dadurch erfolgen, daß der Phasenanschluß P von der Steuereinrichtung 1O von dem ersten Wicklungsanschluß W1 auf den zweiten Wicklungsanschluß W2 umgelegt wird.

Wenn der Wechselstrommotor 12 zum Antrieb bestimmter Einrichtungen, wie z.B. Rolläden, Markisen oder ähnlichem verwendet werden soll, ist zusätzlich zwischen dem ersten Wicklungsanschluß W1 und der Abzweigung zum Motorkondensator CM ein erster Abschalter A1 für die Stromzufuhr zu den Wicklungen 14 und 16 vorgesehen und außerdem zwischen dem zweiten Wicklungsanschluß W2 und der Abzweigung des Motorkondensators CM ein zweiter Abschalter A2 zur Unterbrechung der Stromzufuhr zu den Wicklungen 16, 14. Diese beiden Abschalter A1 und A2 sind Endstellungen der vom Wechselstrommotor 12 zu betreibenden Einrichtungen zugeordnet und so justierbar, daß sie von der jeweiligen Einrichtung bei Erreichen der jeweiligen Endstellung geöffnet werden.

In einem solchen Fall funktioniert der Wechselstrommotor 12 so, daß bei Verbindung des ersten Wicklungsanschlusses W1 mit dem Phasenanschluß P die Wicklungen 14 und 16 solange bestromt sind, bis die Einrichtung ihre Endstellung erreicht hat und durch Betätigen des ersten Abschalters A1 die Stromzufuhr zu den Wicklungen 14 und 16 unterbricht. Der Motor 12 kann somit in dieser Richtung nicht mehr weiter drehen. Erst dann, wenn der Phasenanschluß P von dem ersten Wicklungsanschluß W1 auf den zweiten Wicklungsanschluß W2 umgelegt wird, kann der Wechselstrommotor 12 nunmehr in entgegengesetzter Richtung anlaufen, wobei die jeweilige Einrichtung sich von ihrer Endstellung wegbewegt und somit den ersten Schalter A1 wieder schließt. Dies geht solange, bis die Einrichtung ihre andere Endstellung erreicht hat und den zweiten Abschalter A2 öffnet und somit den Wechselstrommotor 12 zum Stehen bringt.

Zur Herstellung einer Verbindung zwischen dem Phasenanschluß P und dem ersten Wicklungsanschluß W1 oder dem zweiten Wicklungsanschluß W2 umfaßt das erste Ausführungsbeispiel der erfindungsgemäßen Steuereinrichtung ein Steuerteil 18. In diesem Steuerteil 18 sind zwischen einer positiven Speisespannung + und einer negativen Speisespannung - ein Relais R1 mit einem Treiber T1 sowie ein Relais R2 mit einem Treiber T2 in Reihe geschaltet. Die Treiber T1 und T2 werden dabei von einer ebenfalls zwischen der positiven Speisespannung + und der negativen Speisespannung - liegenden elektrischen Funktionssteuerung F angesteuert, welche sicherstellt, daß entweder der Treiber T1 oder der Treiber T2 durchgesteuert ist und somit das Relais R1 oder das Relais R2 schalten. Die Funktionssteuerung F kann dabei ein Kommando zum Durchsteuern eines der Treiber T1 oder T2 durch manuelle Bedienung erhalten oder auch beispielsweise über eine Zeitschaltautomatik, welche zu bestimmten Zeiten eine Funktion vorgibt.

Zu Relais R1 gehört ein Kontakt K1, welcher mit einer Kontaktwurzel K1c zwischen den zwei Kontaktpunkten K1a und K1b hin- und herschaltet, so daß entweder die Kontaktwurzel K1c mit dem Kontaktpunkt K1a oder mit Kontaktpunkt K1b verbunden ist. Im Ruhezustand liegt die Kontaktwurzel K1c am Kontaktpunkt K1b an. Der Kontakt K1 ist nun so geschaltet, daß der Kontaktpunkt K1a zum Phasenanschluß P geführt ist, während der Kontaktpunkt K1b mit einem Kondensator C1 in Verbindung steht. Die Kontaktwurzel K1c ist ihrerseits direkt mit dem ersten Wicklungsanschluß W1 verbunden.

In gleicher Weise wie der Kontakt K1 ist auch der zum Relais R2 gehörende Kontakt K2 ausgebildet, d.h. ein Kontaktpunkt K2a ist zum Phasenanschluß P geführt, ein Kontaktpunkt K2b steht mit einem Kondensator C2 in Verbindung und eine Kontaktwurzel K2c ist direkt mit dem zweiten Wicklungsanschluß W2 verbunden.

In einem Ruhezustand des Steuerteils 18 stellen die Kontakte K1 und K2 jeweils eine Verbindung zwischen dem Kontaktpunkt K1b und der Kontaktwurzel K1c sowie zwischen dem Kontaktpunkt K2b und der Kontaktwurzel K2c her, während in einem Schaltzustand des Steuerteils 18 entweder der Kontakt K1 oder der Kontakt K2 die Kontaktwurzel K1c mit dem Kontaktpunkt K1a oder die Kontaktwurzel K2c mit dem Kontaktpunkt K2a verbindet und somit entweder den ersten Wicklungsanschluß W1 oder den zweiten Wicklungsanschluß W2 an den Phasenanschluß P legt.

Zur Versorgung des Steuerteils 18 mit der erforderlichen Speisespannung +, - ist ein Stromversorgungsteil 19 vorgesehen, welches einen ersten Stromversorgungsanschluß S1 und einen zweiten Stromversorgungsanschluß S2 aufweist, wobei der erste Stromversorgungsanschluß S1 mit dem Phasenanschluß P direkt verbunden ist, während der zweite Stromversorgungsanschluß S2 über die Kondensatoren C1 und C2 mit den Kontaktpunkten K1b und K2b in Verbindung steht.

Zwischen dem ersten Stromversorgungsanschluß S1 und dem zweiten Stromversorgungsanschluß S2 des Stromversorgungsteils 19 liegt ein Brückengleichrichter G welcher ausgangseitig die positive und negative Speisespannung +, - abgibt. Ferner ist noch im Stromversorgungsteil ein Kondensator CS vorgesehen, welcher zwischen der positiven und der negativen Speisespannung liegt und als elektrischer Energiespeicher dient, um kurzzeitige Unterbrechungen einer Stromzufuhr zum Stromversorgungsteil 19 über den ersten Stromversorgungsanschluß S1 und den zweiten Stromversorgungsanschluß S2 auszugleichen und während dieser Zeit die positive und die negative Speisespannung +, - aufrechtzuerhalten.

Die Stromversorgung für das Stromversorgungsteil 19 der Steuereinrichtung 10 wird folgendermaßen sichergestellt:
Im Ruhezustand des Steuerteils 18 stellt der Kontakt K1 eine Verbindung zwischen dem ersten Wicklungsanschluß W1 über den Kondensator C1 und dem zweiten Stromversorgungsanschluß her, während gleichzeitig der Kontakt K2 eine Verbindung zwischen dem zweiten Wicklungsanschluß W2 über den Kondensator C2 zu dem zweiten Stromversorgungsanschluß S2 herstellt. Außerdem liegt der erste Stromversorgungsanschluß S1 ständig am Phasenanschluß P.

Angenommen wird eine Situation, in welcher der Wechselstrommotor 12 die beschriebene Einrichtung in eine Endstellung gefahren hat, in welcher diese den ersten Abschalter A1 betätigt, so daß letzterer die Verbindung zwischen dem ersten Wicklungsanschluß W1 und den Wicklungen 14, 16 unterbrochen hat. In diesem Fall ist jedoch gleichzeitig sichergestellt, daß der zweite Abschalter A2 nicht betätigt ist, so daß der zweite Stromversorgungsanschluß S2 über den Kondensator C2, den zweiten Wicklungsanschluß W2, die zweite Wicklung 16 und parallel dazu den Motorkondensator CM und die erste Wicklung 14 mit dem Nulleiter N verbunden ist.

Damit kann das stromversorgungsteil 19 über den Phasenanschluß P und über den ersten Stromversorgungsanschluß S1 einen Strom ziehen, welcher über den zweiten Stromversorgungsanschluß S2, den Kondensator C2, den Kontakt K2, den zweiten Wicklungsanschluß W2, den zweiten Abschalter A2, die zweite Wicklung 16 und parallel dazu den Motorkondensator CM und die erste Wicklung 14 zum Nulleiter N fließt.

Folglich ist in dieser Endstellung und im Ruhezustand des Steuerteils 18 eine Versorgung des Stromversorgungsteils 19 sichergestellt.

Bei betätigtem ersten Abschalter A1 ist ein Anlaufen des Wechselstrommotors 12 nur dann möglich, wenn das Steuerteil 18 durch Betätigen des Kontakts K2 den zweiten Wicklungsanschluß W2 mit dem Phasenanschluß P verbindet. In diesem Schaltzustand des Steuerteils 18 liegt die Kontaktwurzel K2c nicht mehr am Kontaktpunkt K2b, sondern am Kontaktpunkt K2a, so daß die beschriebene Verbindung mit dem Nulleiter N unterbrochen ist. Sobald jedoch der zweite Wicklungsanschluß W2 durch den Kontakt K2 mit dem Phasenanschluß P verbunden wird, läuft der Wechselstrommotor 12 an, so daß die jeweilige Einrichtung ihre Endstellung verläßt und der erste Abschalter A1 nicht mehr betätigt ist und somit schließen kann.

In diesem Schaltzustand des Steuerteils, d.h. wenn die Kontaktwurzel K2c am Kontaktpunkt K2a anliegt, und der erste Abschalter A1 nicht mehr betätigt ist, ist der zweite Stromversorgungsanschluß S2 des Stromversorgungsteils 19 über dem Kondensator C1, dem Kontakt K1, dem ersten Wicklungsanschluß W1 und dem ersten Abschalter A1 mit dem Potential P1 verbunden, welches sich bei laufendem Wechselstrommotor 12 zwischen den Wicklungsanschlüssen W1 und W2 ausbildet. Durch die Verbindung des ersten Stromversorgungsanschlusses S1 mit dem Phasenanschluß P liegt somit das Stromversorgungsteil 19 mit seinem ersten Stromversorgungsanschluß S1 und seinem zweiten Stromversorgungsanschluß S2 an einer Potentialdiefferenz zwischen dem Phasenanschluß P und dem Potential P1, reduziert an dem Spannungsabfall an C1. Diese Potentialdiefferenz ist ausreichend, um die erforderliche positive und negative Speisespannung für das Steuerteil 18, insbesondere zum Betreiben des Relais R2 zu erzeugen.

Einzig in der ersten Anlaufphase des Wechselstrommotors 12, d.h. unmittelbar nach dem Umschalten der Kontaktwurzel K2c von dem Kontaktpunkt K2b auf den Kontaktpunkt K2a, existiert ein Zeitintervall, in welchem der zweite Stromversorgungsanschluß S2 nicht mit dem Potential P1 verbunden ist, da nämlich die Einrichtung sich noch nicht weit genug von ihrer Endstellung wegbewegt hat und immer noch den ersten Abschalter A1 betätigt, welcher eine Verbindung zwischen dem zweiten Stromversorgungsanschluß S2 und dem Potential P1 unterbricht. Dieses Zeitintervall dauert jedoch lediglich in der Größenordnung von msec. Hierfür ist der Kondensator CS im Stromversorgungsteil 19 vorgesehen, welcher sich während dieser kurzen Zeitspanne entlädt und somit die positive und negative Speisespannung +, - während dieser kurzen Zeitspanne, bis der erste Abschalter A1 schließt, aufrechterhält. Eine Stromversorgung der erfindungsgemäßen Steuereinrichtung 1O wird in ähnlicher Weise sichergestellt, wenn der Wechselstrommotor die Einrichtung gegen die andere Endstellung bewegt hat, so daß der zweite Abschalter geöffnet ist.

Da somit das Stromversorgungsteil 19 je nachdem, ob das Steuerteil 18 im Ruhezustand oder im Schaltzustand ist, mit unterschiedlichen Spannungen arbeitet, ist zusätzlich zur Spannungsstabilisierung noch eine Zenerdiode D zwischen der positiven und der negativen Speisespannung vorgesehen.

Die Kondensatoren C1 und C2 dienen bei dem beschriebenen ersten Ausführungsbeispiel der Steuereinrichtung 1O dazu, den Stromfluß durch das Stromversorgungsteil 19 zu begrenzen.

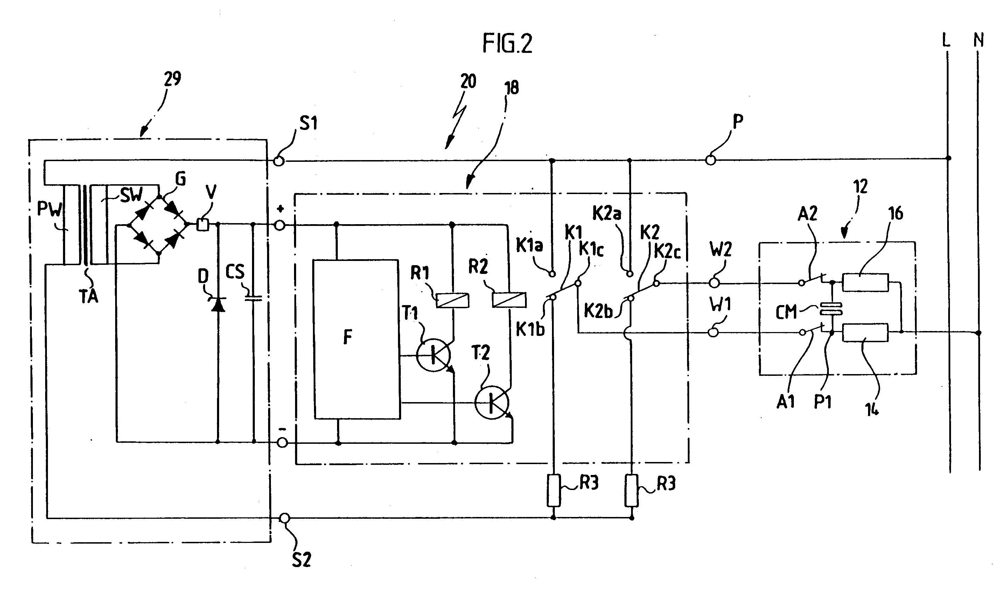

Bei einem zweiten als Ganzes mit 2O bezeichneten Ausführungsbeispiel der erfindungsgemäßen Steuereinrichtung, dargestellt in Fig. 2, sind mit dem ersten Ausführungsbeispiel identische Teile mit denselben Bezugszeichen versehen. Bezüglich deren Beschreibung wird somit auf das erste Ausführungsbeispiel verwiesen.

Im Gegensatz zum ersten Ausführungsbeispiel umfaßt ein Stromversorgungsteil 29 einen zwischen den Stromversorungsanschlüssen S1 und S2 mit einer Primärwicklung PW liegenden Transformator TA, welcher mit einer Sekundärwicklung SW den Gleichrichter G betreibt, der seinerseits wiederum die positive und negative Speisespannung +,- erzeugt.

Der Vorteil des Transformators TA ist darin zu sehen, daß die Stromversorgung des Steuerteils 18 nunmehr potentialfrei erfolgt und damit allen bestehenden Sicherheitsvorschriften entspricht. Ferner fließen durch das Stromübertragungsverhältnis des Transformators TA primärseitig wesentlich geringere Ströme, so daß an den Widerständen R3 auch bei hochohmiger Auslegung keine großen Spannungsabfälle entstehen.

Eine Stabilisierung der Speisespannung +, - erfolgt über einen auf den Gleichrichter G folgenden Vorwiderstand V und die Zenerdiode D sowie den Kondensator CS, welche wie im Stromversorgungsteil 19 zwischen der positiven und der negativen Speisespannung liegen.

Anstelle der Kondensatoren C1 und C2 sind ohm'sche Widerstände R₃ vorgesehen, welche dann, wenn weder der erste Abschalter A1 noch der zweite Abschalter A2 betätigt sind und das Steuerteil 18 von dem Schaltzustand in den Ruhezustand schaltet, dazu vorgesehen sind, eine plötzliche Entladung des Motorkondensators CM und somit eine Funkenbildung beim in den Ruhezustand zurückschaltenden Kontakt K1 oder K2 zu verhindern.

Im übrigen funktioniert das zweite Ausführungsbeispiel genau wie das erste Ausführungsbeispiel.

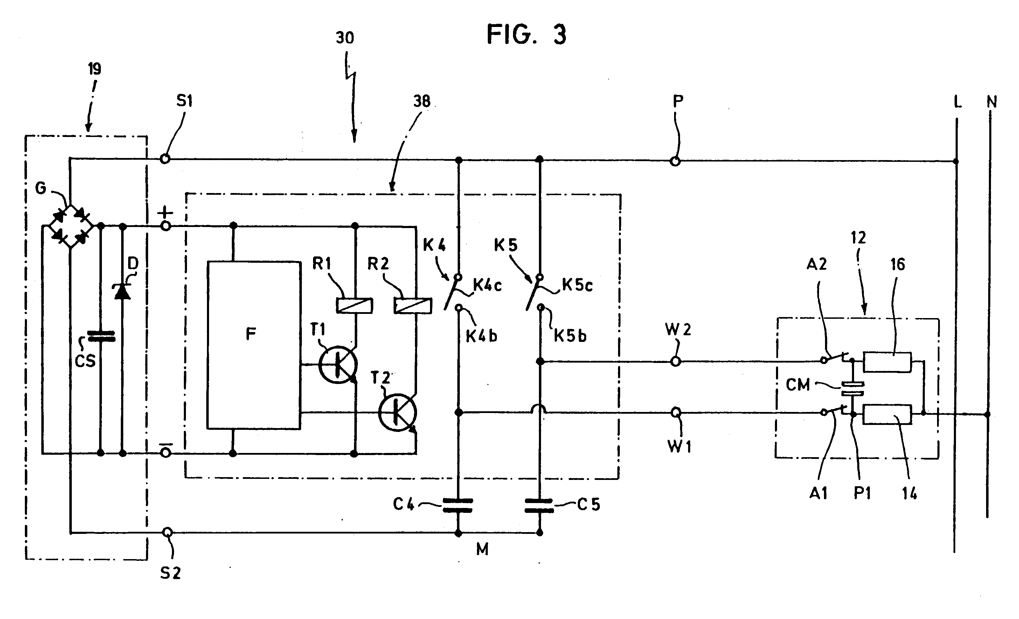

Bei einem dritten, als Ganzes mit 3O bezeichneten Ausführungsbeispiel der erfindungsgemäßen Steuereinrichtung, dargestellt in Fig. 3, sind mit dem ersten Ausführungsbeispiel identische Teile mit denselben Bezugszeichen versehen, so daß bezüglich deren Beschreibung auf die Ausführungen zum ersten Ausführungsbeispiel verwiesen werden kann.

Im Gegensatz zum ersten Ausführungsbeispiel haben die beiden Relais R1 und R2 anders ausgebildete Kontakte K4 und K5. Diese Kontakte K4, K5 sind lediglich Ein/Ausschalter, so daß eine Kontaktwurzel K4c lediglich mit einem Kontaktpunkt K4b verbindbar ist oder nicht. Desgleichen ist auch eine Kontaktwurzel K5c mit einem Kontaktpunkt K5b verbindbar oder nicht.

Der Kontaktpunkt K4b ist über einen Kondensator C4 mit dem zweiten Stromversorgungsanschluß S2 und der Kontakt K5b über einen Kondensator C5 mit dem Stromversorgungsanschluß S2 verbunden. Zwischen dem Kontaktpunkt K4b und dem Kondensator C4 zweigt eine zu dem ersten Wicklungsanschluß W1 führende Leitung ab und außerdem zwischen dem Kontaktpunkt K5b und dem Kondensator C5 eine zu dem zweiten Wicklungsanschluß W2 führende Leitung.

Die Kontaktwurzeln K4c und K5c der Kontakte K4 und K5 sind beide direkt mit dem Phasenanschluß P verbunden.

Der Stromversorgungsteil 19 ist beim dritten Ausführungsbeispiel 30 identisch wie beim ersten Ausführungsbeispiel 10 ausgebildet.

Das dritte Ausführungsbeispiel 3O der erfindungsgemäßen Steuereinheit funktioniert nun so, daß im Ruhezustand des Steuerteils 38 die Kontakte K4 und K5 offen sind, d.h. keine Verbindung zwischen den Kontaktwurzeln K4c bzw. K5c und den Kontaktpunkten K4b bzw. K5b herstellen.

Da der Stromversorgungsanschluß S2 über den Kondensator C4 ständig mit dem ersten Wicklungsanschluß W1 und über den Kondensator C5 ständig mit dem zweiten Wicklungsanschluß W2 verbunden ist, kann genau wie beim ersten Ausführungsbeispiel ein Stromfluß vom zweiten Stromversorgungsanschluß S2 zum Nulleiter über den Wechselstrommotor 12 erfolgen, auch wenn einer der Abschalter A1 oder A2 betätigt ist.

Geht nun, unter der Voraussetzung, daß der erste Abschalter A1 betätigt ist, der Steuerteil 38 in den schaltzustand über, d.h. daß der Kontakt K5 schließt, so wird der zweite Wicklungsanschluß W2 direkt mit dem Phasenanschluß P verbunden. In diesem Fall läuft der Motor an und wird nach einer kurzen Zeit die zu betreibende Einrichtung so weit bewegt haben, daß der erste Abschalter A1 nicht mehr betätigt ist und somit schließt. In diesem Zustand stellt sich bei laufendem Wechselstrommotor 12 ebenfalls wieder das Potential P1 ein, so daß der erste Wicklungsanschluß W1 auf dem Potential P1 liegt, während der zweite Wicklungsanschluß W2 aufgrund des geschlossenen Schalters K5 auf dem Potential des Phasenanschlusses P liegt. Die Kondensatoren C4 und C5 liegen nunmehr an der Potentialdifferenz zwischen P und P1 und stellen einen Spannungsteiler dar, an dessen Mittelabgriff M der zweite Stromversorgungsanschluß S2 liegt. Dabei addiert sich die Kapazität des Spannungsteilers, bestehend aus den Kondensatoren C4 und C5 zu der Kapazität des Motorkondensators CM. Vorzugsweise werden die Kondensatoren C4 und C5 so gewählt, daß deren Werte um mehr als einen Faktor 1O, vorzugsweise um mehr als einen Faktor 1OO, kleiner als die Kapazität des Motorkondensators CM ist, so daß deren Einfluß vernachlässigbar ist. Der über diesen Spannungsteiler, umfassend die Kondensatoren C4 und C5, fließende Strom ist jedoch immer noch ausreichend, um das Stromversorgungsteil 19 zu betreiben. Vorzugsweise sind dabei die Kondensatoren C4 und C5 identisch gewählt.

Bei diesem dritten Ausführungsbeispiel 3O wird somit zum Betreiben des Stromversorgungsteils 19 nicht die gesamte Potentialdifferenz zwischen dem Phasenanschluß P und dem Potential P1 ausgenützt, sondern diese nochmals durch den Spannungsteiler, umfassend die Kondensatoren C4 und C5, reduziert. Das Vorsehen dieses Spannungsteilers ist dann, wenn die Kontakte K4 und K5 lediglich Aus/Einschaltkontakte sind, notwendig, um zwischen dem ersten Wicklungsanschluß W1 und dem zweiten Wicklungsanschluß W2 einen Kurzschluß zu vermeiden und eine Potentialdifferenz zwischen den Stromversorgungsanschlüssen S1 und S2 entstehen zu lassen. Zweckmäßigerweise werden die Kondensatoren C4 und C5 gleich dimensioniert, um in beiden Laufrichtungen dieselben Verhältnisse zu erhalten.

In gleicher Weise wie beim ersten Ausführungsbeispiel besteht dann, wenn der Abschalter A1 betätigt ist, unmittelbar nach dem Schließen des Kontakts K5 ebenfalls eine Unterbrechung der Stromzufuhr zum Stromversorgungsteil 19, was ebenfalls durch den Kondensator CS in gleicher Weise wie beim ersten Ausführungsbeispiel überbrückt wird.

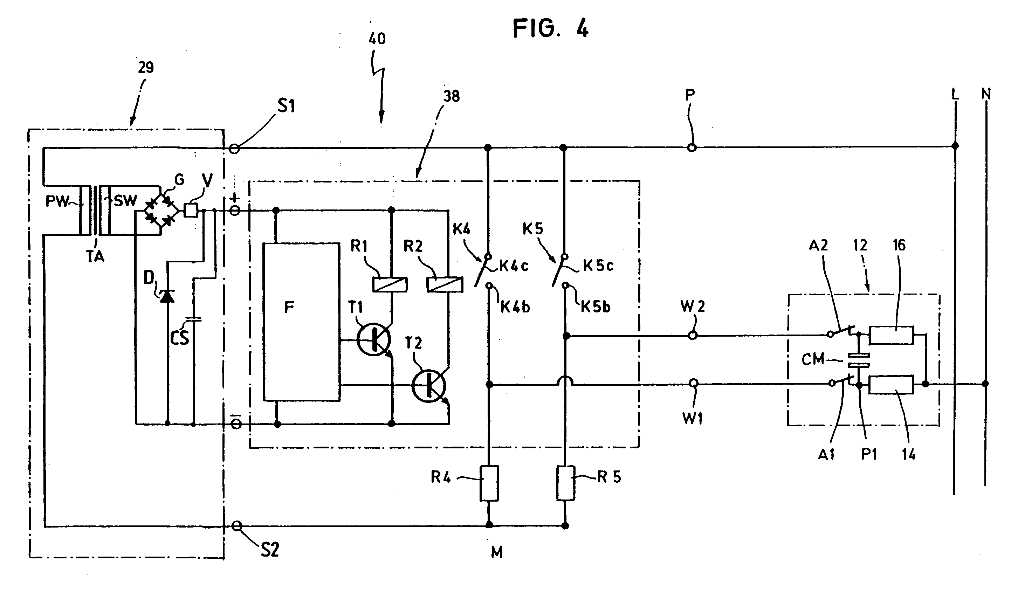

Bei einem vierten Ausführungsbeispiel 40, dargestellt in Fig. 4, sind, insoweit als dieselben Teile wie bei den vorangehenden Ausführungsbeispielen Verwendung finden, dieselben Bezugszeichen verwendet, so daß hinsichtlich dieser Teile auf die voranstehenden Ausführungen verwiesen werden kann.

Im Gegensatz zum dritten Ausführungsbeispiel ist das Stromversorgungsteil 29 genauso wie beim zweiten Ausführungsbeispiel 20 ausgebildet, während das Steuerteil 38 mit dem des dritten Ausführungsbeispiels identisch ist.

Im Gegensatz zu den Kondensatoren C4 und C5 beim dritten Ausführungsbeispiel sind beim vierten Ausführungsbeispiel ohm'sche Widerstände R4 und R5 verwendet, die jedoch ebenfalls so bemessen sind, daß ein Stromfluß über den durch diese Widerstände R4 und R5 gebildeten Spannungsteiler gegenüber dem Stromfluß über den Kondensator CM vernachlässigbar ist.

Ansonsten funktioniert das vierte Ausführungsbeispiel genauso wie das dritte Ausführungsbeispiel mit dem Unterschied, daß das Steuerteil 38 aufgrund des Transformators TA im Stromversorgungsteil 29 potentialfrei ist.

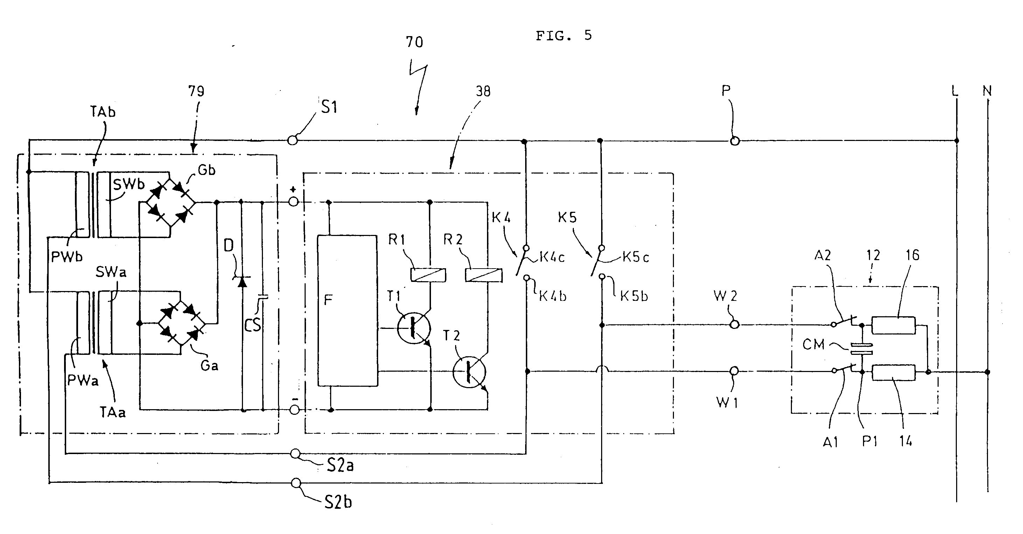

Ein als Ganzes mit 70 bezeichnetes fünftes Ausführungsbeispiel, dargestellte in Fig. 5, ist, insoweit als mit den vorhergehenden Ausführungsbeispielen identische Teile verwendet werden, mit denselben Bezugszeichen versehen, so daß hinsichtlich deren Beschreibung auf die voranstehenden Ausführungen verwiesen werden kann. Insbesondere ist das Steuerteil 38 mit dem des dritten Ausführungsbeispiels identisch.

Im Gegensatz zu den voranstehenden Ausführungsbeispielen umfaßt ein Stromversorgungsteil 79 anstelle eines Stromversorgungsanschlusses S2 zwei Stromversorgungsanschlüsse S2a und S2b. Dabei liegt zwischen dem ersten Stromversorgungsanschluß S1 und dem zweiten Stromversorgungsanschluß S2a eine Primärwicklung PWa eines Transformators TAa, während zwischen dem Stromversorgungsanschluß S1 und dem zweiten Stromversorgungsanschluß S2b eine Primärwicklung PWb eines Transformators TAb liegt.

Beide Transformatoren TAa und TAb dienen zur Auskopplung elektrischer Energie und weisen jeweils eine Sekundärwicklung SWa und SWb auf, wobei jede dieser Sekundärwicklungen SWa bzw. SWb eingangsseitig mit einem Gleichrichter Ga bzw. Gb verbunden ist. Beide Gleichrichter Ga und Gb sind ausgangsseitig parallelgeschaltet und geben die erforderliche Speisespannung +, - für das Steuerteil 38 ab.

Zur Stabilisierung der Speisespannung sind ebenfalls wie bei den vorhergehenden Ausführungsbeispielen, die Zenerdiode D und der Kondensator CS vorgesehen.

Dieses fünfte Ausführungsbeispiel 70 arbeitet nun so, daß im Ruhezustand zumindest über eine Primärwicklung PWa oder PWb ein Strom über den Wechselstrommotor 12 zum Nulleiter N fließt und somit zumindest einer der Transformatoren Ta oder Tb eine Wechselspannung über die Sekundärwicklung SWa bzw. SWb auskoppelt, welche in dem entsprechenden Gleichrichter Ga bzw. Gb gleichgerichtet wird. Die Tatsache, daß bei einem betätigten Endschalter A1 oder A2 einer der Transformatoren TAa oder TAb nicht arbeitet, ist ohne Belang, solange lediglich einer von diesen zur Auskopplung von Energie in der Lage ist.

Im Schaltzustand ist diejenige Primärwicklung PWa oder PWb, welche mit dem den geschlossenen Kontakt K1 oder K2 zugeordneten Wicklungsanschluß W1 oder W2 verbunden ist, beiderseits mit dem Phasenanschluß P verbunden. Somit liefert der jeweilige Transformator TAa oder TAb keine Speisespannung. Dagegen fließt durch die Primärwicklung PWb oder PWa des jeweils anderen Transformators TAa und TAb ein Strom, da diese einerseits mit dem Phasenanschluß P und andererseits mit dem Wicklungsanschluß W2 oder W1 verbunden ist, welcher dem offene Kontakt K2 oder K1 zugeordnet ist. Somit ist dieser Transformator TAb oder TAa in Verbindung mit dem entsprechenden Gleichrichter Gb oder Ga in der Lage, die notwendige Speisespannung +, - für das Steuerteil 38 zu liefern.

## Patentansprüche

1. Steuereinrichtung für einen einphasig betreibbaren Wechselstrommotor (12), welcher mindestens eine erste und eine zweite, mit der anderen jeweils phasenverschoben gekoppelte Wicklung (14, 16) aufweist, mit einem Leitungsanschluß (P), mit einem ersten und einem zweiten Wicklungsanschluß (W1, W2) für die erste bzw. die zweite Wicklung (14, 16) des Wechselstrommotors (12), mit einem Steuerteil (18, 38), umfassend ein erstes und ein zweites zwischen dem Leitungsanschluß (P) und dem ersten bzw. zweiten Wicklungsanschluß (W1, W2) liegendes Schaltelement (R1, R2, K4, K5), von denen jeweils eines in einem Schaltzustand des Steuerteils (18, 38) je nach Laufrichtung des Wechselstrommotors (12) offen und das andere geschlossen ist und von denen in einem Ruhezustand des Steuerteils (18, 38) mindestens eines offen ist, und mit einem Stromversorgungsteil (19, 29, 79) zur Bereitstellung der elektrischen Energie für das Steuerteil (18, 38), wobei das Stromversorgungsteil (19, 29) im Ruhezustand des Steuerteils (18, 38) unter Heranziehung einer ersten Potentialdifferenz zwischen dem Leitungsanschluß (P) und einem dem im Ruhezustand offenen Schaltelement zugeordneten Wicklungsanschluß (W1, W2) und im Schaltzustand des Steuerteils (18, 38) unter Heranziehung einer zweiten Potentialdifferenz zwischen dem Leitungsanschluß (P) und dem im Schaltzustand offenen Schaltelement (K4, K5) zugeordneten Wicklungsanschluß (W1, W2) arbeitet, **dadurch gekennzeichnet,** daß die Schaltelemente als Relais (R1, R2; K4, K5) ausgebildet sind, daß der zweite Stromversorgungsanschluß (S2) über jeweils einen Wechselstromwiderstand (C4, C5; R4, R5) mit jedem Wicklungsanschluß (W1, W2) verbunden ist, welche im Schaltzustand als Spannungsteiler wirken, an dessen Mittelabgriff (M) der zweite Stromversorgungsanschluß (S2) liegt.

2. Steuereinrichtung nach Anspruch 1, dadurch gekennzeichnet, daß das Stromversorgungsteil (19, 29) einen von den beiden Stromversorgungsanschlüssen (S1, S2) gespeisten Brückengleichrichter (G) umfaßt.

3. Steuereinrichtung für einen einphasig betreibbaren Wechselstrommotor (12), welcher mindestens eine erste und eine zweite, mit der anderen jeweils phasenverschoben gekoppelte Wicklung (14, 16) aufweist, mit einem Leitungsanschluß (P), mit einem ersten und einem zweiten Wicklungsanschluß (W1, W2) für die erste bzw. die zweite Wicklung (14, 16) des Wechselstrommotors (12), mit einem Steuerteil (18, 38), umfassend ein erstes und ein zweites zwischen dem Leitungsanschluß (P) und dem ersten bzw. zweiten Wicklungsanschluß (W1, W2) liegendes Schaltelement (R1, R2; K1, K2) von denen jeweils eines in einem Schaltzustand des Steuerteils (18, 38) je nach Laufrichtung des Wechselstrommotors (12) offen und das andere geschlossen ist und von denen in einem Ruhezustand des Steuerteils (18, 38) mindestens eines offen ist, und mit einem Stromversorgungsteil (19, 29) zur Bereitstellung der elektrischen Energie für das Steuerteil (18, 38), wobei das Stromversorgungsteil (19, 29) im Ruhezustand des Steuerteils (18, 38) unter Heranziehung einer ersten Potentialdifferenz zwischen dem Leitungsanschluß (P) und einem dem im Ruhezustand offenen Schaltelement zugeordneten Wicklungsanschluß (W1, W2) und im Schaltzustand des Steuerteils (18, 38) unter Heranziehung einer zweiten Potentialdifferenz zwischen dem Leitungsanschluß (P) und dem im Schaltzustand offenen Schaltelement (K1, K2) zugeordneten Wicklungsanschluß (W1, W2) arbeitet, dadurch gekennzeichnet, daß die Schaltelemente als Relais (R1, R2; K1, K2) ausgebildet sind und daß das Stromversorgungsteil (19, 29) durch einen ersten Stromversorgungsanschluß (S1) mit dem Leitungsanschluß (P) und durch mindestens einen zweiten Stromversorgungsanschluß (S2) im Ruhezustand und im Schaltzustand durch mindestens ein je nach Laufrichtung des Wechselstrommotors (12) angesteuertes Umschaltglied (K1, K2) mit dem ausgewählten Wicklungsanschluß (W1, W2) verbunden ist.

4. Steuereinrichtung nach Anspruch 3, dadurch gekennzeichnet, daß mindestens eines der Schaltelemente (K1, K2) als Umschaltglied ausgebildet ist und den diesem zugeordneten Wicklungsanschluß (W1, W2) entweder mit dem Leitungsanschluß (P) oder mit dem zweiten Stromversorgungsanschluß (S2) verbindet.

5. Steuereinrichtung nach einem der Ansprüche 3 oder 4, dadurch gekennzeichnet, daß der zweite Stromversorgungsanschluß (S2) über jeweils einen Wechselstromwiderstand (C1, C2; R3) mit jedem Wicklungsanschluß (W1, W2) verbunden ist.

6. Steuereinrichtung nach einem der Ansprüche 1 oder 2 oder 5, dadurch gekennzeichnet, daß die Wechselstromwiderstände Kapazitäten (C1, C2; C4, C5) umfassen.

7. Steuereinheit nach einem der voranstehenden Ansprüche, dadurch gekennzeichnet, daß zwischen dem ersten und dem zweiten Stromversorgungsanschluß (S1, S2) eine Primärwicklung (PW) eines Transformators (P1) liegt und daß eine Sekundärwicklung (SW) desselben zur Bereitstellung der elektrischen Energie für das Steuerteil herangezogen wird.

8. Steuereinheit nach einem der Ansprüche 3 bis 7, dadurch gekennzeichnet, daß das Stromversorgungsteil (19, 29, 79) einen Gleichrichter (G) aufweist.

9. Steuereinrichtung für einen einphasig betreibbaren Wechselstrommotor (12), welcher mindestens eine erste und eine zweite, mit der anderen jeweils phasenverschoben gekoppelte Wicklung (14, 16) aufweist, mit einem Leitungsanschluß (P), mit einem ersten und einem zweiten Wicklungsanschluß (W1, W2) für die erste bzw. die zweite Wicklung (14, 16) des Wechselstrommotors (12), mit einem Steuerteil (18, 38), umfassend ein erstes und ein zweites zwischen dem Leitungsanschluß (P) und dem ersten bzw. zweiten Wicklungsanschluß (W1, W2) liegendes Schaltelement (R1, R2; K4, K5), von denen jeweils eines in einem Schaltzustand des Steuerteils (18, 38) je nach Laufrichtung des Wechselstrommotors (12) offen und das andere geschlossen ist und von denen in einem Ruhezustand des Steuerteils (18, 38) mindestens eines offen ist, und mit einem Stromversorgungsteil (19, 29, 79) zur Bereitstellung der elektrischen Energie für das Steuerteil (18, 38), wobei das Stromversorgungsteil (19, 29, 79) im Ruhezustand des Steuerteils (18, 38) unter Heranziehung einer ersten Potentialdifferenz zwischen dem Leitungsanschluß (P) und einem dem im Ruhezustand offenen Schaltelement zugeordneten Wicklungsanschluß (W1, W2) und im Schaltzustand des Steuerteils (18, 38) unter Heranziehung einer zweiten Potentialdifferenz zwischen dem Leitungsanschluß (P) und dem im Schaltzustand offenen Schaltelement (K4, K5) zugeordneten Wicklungsanschluß (W1, W2) arbeitet, dadurch gekennzeichnet, daß die Schaltelemente als Relais (R1, R2; K4, K5) ausgebildet sind, daß das Stromversorgungsteil (79) zwei zweite Stromversorgungsanschlüsse (S2a, S2b) umfaßt, die jeweils mit einem Wicklunganschluß (W1, W2) verbunden sind, daß zwischen dem Leitungsanschluß (P) und jedem zweiten Stromversorgungsanschluß (S2a, S2b) eine Primärwicklung (PWa, PWb) eines Transformators (TAa, TAb) liegt und daß eine Sekundärwicklung (SWa, SWb) jedes Transformators (TAa, TAb) mit der jeweils anderen gekoppelt ist.

10. Steuereinrichtung nach Anspruch 9, dadurch gekennzeichnet, daß jede Sekundärwicklung (SWa, SWb) mit einem Eingang eines Gleichrichters (Ga, Gb) verbunden ist und Ausgänge der Gleichrichter (Ga, Gb) parallelgeschaltet sind.

11. Steuereinrichtung nach einem der voranstehenden Ansprüche, dadurch gekennzeichnet, daß das Stromversorgungsteil (19, 29, 79) einen elektrischen Energiespeicher (CS) aufweist.

12. Steuereinrichtung nach Anspruch 11, dadurch gekennzeichnet, daß der elektrische Energiespeicher ein Kondensator (CS) ist.

## Claims

1. Control device for an alternating-current motor (12) operable in single phase and having at least a first and a second winding (14, 16) coupled one with the other so as to be shifted in phase with respect to each other, comprising a line connection (P), a first and a second winding connection (W1, W2) for the first and the second winding (14, 16), respectively, of the alternating-current motor (12), a control unit (18, 38) comprising a first and a second switching element (R1, R2, K4, K5) located between the line connection (P) and the first and the second winding connection (W1, W2), respectively, one of said switching elements being open and the other closed in a switching state of the control unit (18, 38), depending on the running direction of the alternating-current motor (12), and at least one of them being open in a state of rest of the control unit (18, 38), and a power supply unit (19, 29, 79) for providing the electrical energy for the control unit (18, 38), the power supply unit (19, 29) operating in the state of rest of the control unit (18, 38) by drawing on a first difference in potential between the line connection (P) and a winding connection (W1, W2) associated with the switching element open in the state of rest and in the switching state of the control unit (18, 38) by drawing on a second difference in potential between the line connection (P) and the winding connection (W1, W2) associated with the switching element (K4, K5) open in the switching state, characterized in that the switching elements are designed as relays (R1, R2; K4, K5), that the second power supply connection (S2) is connected with each winding connection (W1, W2) via a respective alternating-current resistor (C4, C5; R4, R5), said resistors acting in the switching state as voltage divider and the second power supply connection (S2) being connected to the center tap (M) thereof.

2. Control device as defined in claim 1, characterized in that the power supply unit (19, 29) comprises a bridge rectifier (G) fed by the two power supply connections (S1, S2).

3. Control device for an alternating-current motor (12) operable in single phase and having at least a first and a second winding (14, 16) coupled one with the other so as to be shifted in phase with respect to each other, comprising a line connection (P), a first and a second winding connection (W1, W2) for the first and the second winding (14, 16), respectively, of the alternating-current motor (12), a control unit (18, 38) comprising a first and a second switching element (R1, R2; K1, K2) located between the line connection (P) and the first and the second winding connection (W1, W2), respectively, one of said switching elements being open and the other closed in a switching state of the control unit (18, 38), depending on the running direction of the alternating-current motor (12), and at least one of them being open in a state of rest of the control unit (18, 38), and a power supply unit (19, 29) for providing the electrical energy for the control unit (18, 38), the power supply unit (19, 29) operating in the state of rest of the control unit (18, 38) by drawing on a first difference in potential between the line connection (P) and a winding connection (W1, W2) associated with the switching element open in the state of rest and in the switching state of the control unit (18, 38) by drawing on a second difference in potential between the line connection (P) and the winding connection (W1, W2) associated with the switching element (K1, K2) open in the switching state, characterized in that the switching elements are designed as relays (R1, R2; K1, K2) and that the power supply unit (19, 29) is connected with the line connection (P) by a first power supply connection (S1) and with the selected winding connection (W1, W2) by at least one second supply connection (S2) in the state of rest and in the switching state by at least one switchover element (K1, K2) activated in accordance with the running direction of the alternating-current motor (12).

4. Control device as defined in claim 3, characterized in that at least one of the switching elements (K1,K2) is designed as a switchover element and connects the winding connection (W1, W2) associated therewith either with the line connection (P) or with the second power supply connection (S2).

5. Control device as defined in one of claims 3 or 4, characterized in that the second power supply connection (S2) is connected with each winding connection (W1, W2) via a respective alternating-current resistor (C1, C2; R3).

6. Control device as defined in any of claims 1 or 2 or 5, characterized in that the alternating-current resistors comprise capacitors (C1, C2; C4, C5).

7. Control device as defined in any of the preceding claims, characterized in that a primary winding (PW) of a transformer (P1) is located between the first and the second power supply connection (S1, S2) and that a secondary winding (SW) thereof is used to provide the electrical energy for the control unit.

8. Control device as defined in any of claims 3 to 7, characterized in that the power supply unit (10, 29, 79) includes a rectifier (G).

9. Control device for an alternating-current motor (12) operable in single phase and having at least a first and a second winding (14, 16) coupled one with the other so as to be shifted in phase with respect to each other, comprising a line connection (P), a first and a second winding connection (W1, W2) for the first and the second winding (14, 16), respectively, of the alternating-current motor (12), a control unit (18, 38) comprising a first and a second switching element (R1, R2; K4, K5) located between the line connection (P) and the first and the second winding connection (W1, W2), respectively, one of said switching elements being open and the other closed in a switching state of the control unit (18, 38), depending on the running direction of the alternating-current motor (12), and at least one of them being open in a state of rest of the control unit (18, 38), and a power supply unit (19, 29, 79) for providing the electrical energy for the control unit (18, 38), the power supply unit (19, 29, 79) operating in the state of rest of the control unit (18, 38) by drawing on a first difference in potential between the line connection (P) and a winding connection (W1, W2) associated with the switching element open in the state of rest and in the switching state of the control unit (18, 38) by drawing on a second difference in potential between the line connection (P) and the winding connection (W1, W2) associated with the switching element (K4, K5) open in the switching state, characterized in that the switching elements are designed as relays (R1, R2; K4, K5), that the power supply unit (79) comprises two second power supply connections (S2a, S2b), each connected with a winding connection (W1, W2), that a primary winding (PWa, PWb) of a transformer (TAa, TAb) is located between the line connection (P) and each second power supply connection (S2a, S2b) and that a secondary winding (SWa, SWb) of each transformer (TAa, TAb) is coupled with the other respective one thereof.

10. Control device as defined in claim 9, characterized in that each secondary winding (SWa, SWb) is connected with an input of a rectifier (Ga, Gb) and outputs of said rectifiers (Ga, Gb) are connected in parallel.

11. Control device as defined in any of the preceding claims, characterized in that the power supply unit (19, 29, 79) includes an electrical energy storage means (CS).

12. Control device as defined in claim 11, characterized in that the electrical energy storage means is a capacitor (CS).

## Revendications

1. Dispositif de commande pour un moteur à courant alternatif (12) à excitation monophasée, pourvu d'au moins un premier et un second enroulements (14, 16) respectivement couplés avec déphasage mutuel, où il est prévu une connexion d'alimentation (P), une première et une seconde bornes d'enroulement (W1, W2) pour le premier et le second enroulements (14, 16) du moteur à courant alternatif (12), une partie de commande (18, 38), comportant un premier et un second élément de commutation (R1, R2, K4, K5) respectivement situés entre la connexion d'alimentation (P) et la première ou la seconde borne d'enroulement (W1, W2) et dont respectivement un est ouvert dans un état de commutation de la partie de commande (18, 38) en fonction du sens de marche du moteur à courant alternatif (12) et l'autre est fermé, tandis que, dans un état de repos de la partie de commande (18, 38), au moins un des éléments de commutation est ouvert, et en outre une partie d'alimentation en courant (19, 29, 79) pour alimenter en courant électrique la partie de commande (18, 38), cette partie d'alimentation en courant (19, 29) fonctionnant, dans l'état de repos de la partie de commande (18, 38), en établissant une première différence de potentiel entre la connexion d'alimentation (P) et une borne d'enroulement (W1, W2) associée à l'élément de commutation ouvert dans l'état de repos alors que, dans l'état de commutation de la partie de commande (18, 38), elle, fonctionne en établissant une seconde différence de potentiel entre la connexion d'alimentation (P) et la borne d'enroulement (W1, W2) qui est associée à l'élément de commutation (K4, K5) ouvert dans l'état de commutation, dispositif caractérisé en ce que les éléments de commutation sont agencés comme des relais (R1, R2 ; K4, K5), en ce que la seconde borne d'alimentation en courant (S2) est reliée, par l'intermédiaire d'une impédance pour courant alternatif respective (C4, C5 : R4, R5) avec chaque borne d'enroulement (W1, W2), ces impédances agissant dans l'état de commutation comme un diviseur de tension à la prise centrale (M) duquel est reliée la seconde borne d'alimentation en courant (S2).

2. Dispositif de commande selon la revendication 1, caractérisé en ce que la partie d'alimentation en courant (19, 19) comporte un redresseur à pont (G) alimenté par les deux bornes d'alimentation en courant (S1, S2).

3. Dispositif de commande pour un moteur à courant alternatif (12) à excitation monophasée, pourvu d'au moins un premier et un second enroulements (14, 16) respectivement couplés avec déphasage mutuel, où il est prévu une connexion d'alimentation (P), une première et une seconde bornes d'enroulement (W1, W2) pour le premier et le second enroulement (14, 16) du moteur à courant alternatif (12), une partie de commande (18, 38), comportant un premier et un second élément de commutation (R1, R2; K1, K2) respectivement situés entre la connexion d'alimentation (P) et la première ou la seconde borne d'enroulement (W1, W2) et dont respectivement un est ouvert dans un état de commutation de la partie de commande (18, 38) en fonction du sens de marche du moteur à courant alternatif (12) et l'autre est fermé, tandis que, dans un état de repos de la partie de commande (18, 38), au moins un des éléments de commutation est ouvert, et en outre une partie d'alimentation en courant (19, 19, 79) pour alimenter en courant électrique la partie de commande (18, 38), cette partie d'alimentation en courant (19, 29) fonctionnant, dans l'état de repos de la partie de commande (18, 38), en établissant une première différence de potentiel entre la connexion d'alimentation (P) et une borne d'enroulement (W1, W2) associée à l'élément de commutation ouvert dans l'état de repos alors que, dans l'état de commutation de la partie de commande (18, 38), elle fonctionne en établissant une seconde différence de potentiel entre la connexion d'alimentation (P) et la borne d'enroulement (W1, W2) qui est associée à l'élément de commutation (K1, K2 ) ouvert dans l'état de commutation, caractérisé en ce que les éléments de commutation sont agencés sous forme de relais (R1, R2 ; K1, K2) et en ce que la partie d'alimentation en courant (19, 29) est reliée à la connexion d'alimentation (P) par une première borne d'alimentation en courant (S1) et est en outre reliée à la borne d'enroulement sélectionnée (W1, W2), par au moins une seconde borne d'alimentation en courant (S2), dans l'état de repos et dans l'état de commutation, par au moins un organe de commutation (K1, K2) commandé en fonction du sens de marche du moteur à courant alternatif (12).

4. Dispositif de commande selon la revendication 3, caractérisé en ce qu'au moins un des éléments de commutation (K1, K2) est agencé comme un organe inverseur et relie la borne d'enroulement (W1, W2) qui lui est associée soit avec la connexion d'alimentation (P) soit avec la seconde borne d'alimentation en courant (S2).

5. Dispositif de commande selon une des revendications 3 ou 4, caractérisé en ce que la seconde borne d'alimentation en courant (S2) est reliée à chaque borne d'enroulement (W1, W2) par l'intermédiaire d'une impédance respective (C1, C2 ; R3).

6. Dispositif de commande selon une des revendications 1 ou 2 ou 5, caractérisé en ce que les impédances comportent des capacités (C1, C2 ; C4, C5).

7. Dispositif de commande selon une des revendications précédentes, caractérisé en ce qu'il est prévu entre la première et la seconde borne d'alimentation en courant (S1, S2) un enroulement primaire (PW) d'un transformateur (P1) et en ce qu'un enroulement secondaire (SW) de ce dernier est utilisé pour fournir l'énergie électrique à la partie de commande.

8. Dispositif de commande selon une des revendications 3 à 7, caractérisé en ce que la partie d'alimentation en courant (19, 29, 79) comprend un redresseur (G).

9. Dispositif de commande pour un moteur à courant alternatif (12) à excitation monophasée, pourvu d'au moins un premier et un second enroulement (14, 16) respectivement couplés avec déphasage mutuel, où il est prévu une connexion d'alimentation (P), une première et une seconde borne d'enroulement (W1, W2) pour le premier et le second enroulement (14, 16) du moteur à courant alternatif (12), une partie de commande (18, 38), comportant un premier et un second élément de commutation (R1, R2, K4, K5) respectivement situés entre la connexion d'alimentation (P) et la première ou la seconde borne d'enroulement (W1, W2) et dont respectivement un est ouvert dans un état de commutation de la partie de commande (18, 38) en fonction du sens de marche du moteur à courant alternatif (12) et l'autre est fermé, tandis que, dans un état de repos de la partie de commande (18, 38), au moins un des éléments de commutation est ouvert, et en outre une partie d'alimentation en courant (19, 29, 79) pour alimenter en courant électrique la partie de commande (18, 38), cette partie d'alimentation en courant (19, 79) fonctionnant, dans l'état de repos de la partie de commande (18, 38), en établissant une première différence de potentiel entre la connexion d'alimentation (P) et une borne d'enroulement (W1, W2) associée à l'élément de commutation ouvert dans l'état de repos alors que, dans l'état de commutation de la partie de commande (18, 38), elle fonctionne en établissant une seconde différence de potentiel entre la connexion d'alimentation (P) et la borne d'enroulement (W1, W2) qui est associée à l'élément de commutation (K4, K5) ouvert dans l'état de commutation, caractérisé en ce que les éléments de commutation sont agencés sous forme de relais (R1, R2 ; K4, K5), en ce que la partie d'alimentation en courant (79) comporte deux secondes bornes d'alimentation en courant (S2a, S2b) qui sont chacune reliée à une borne d'enroulement (W1, W2), en ce qu'il est prévu entre la connexion d'alimentation (P) et chaque seconde borne d'alimentation en courant (S2a, S2b) un enroulement primaire (PWa, PWb) d'un transformateur (TAa, TAb) et en ce qu'un enroulement secondaire (SWa, SWb) de chaque transformateur (TAa, TAb) est relié avec l'autre enroulement correspondant.

10. Dispositif de commande selon la revendication 9, caractérisé en ce que chaque enroulement secondaire (SWa, SWb) est relié à une entrée d'un redresseur (Ga, Gb) et les sorties des redresseurs (Ga, Gb) sont connectées en parallèle.

11. Dispositif de commande selon une des revendications précédentes, caractérisé en ce que la partie d'alimentation en courant (19, 29, 79) comporte un accumulateur d'énergie électrique (CS).

12. Dispositif de commande selon la revendication 11, caractérisé en ce que l'accumulateur d'énergie électrique est un condensateur (CS).
